# EUROPÄISCHE PATENTSCHRIFT

(11) **EP 3 598 265 B1**
(45) Veröffentlichungstag und Bekanntmachung des Hinweises auf die Patenterteilung: **22.06.2022**
(21) Anmeldenummer: 19181001.9
(22) Anmeldetag: 18.06.2019
(51) Int. Cl.: G05D 21/02

(54) **FLÜSSIGKEITSMISCHSYSTEM ZUM MISCHEN VON KOMPONENTEN FÜR EIN FLÜSSIGES PRODUKT**
FLUID MIXING SYSTEM FOR MIXING COMPONENTS FOR A LIQUID PRODUCT
SYSTÈME DE MÉLANGE DE LIQUIDES PERMETTANT DE MÉLANGER DES COMPOSANTS POUR UN PRODUIT LIQUIDE

(30) Priorität: 10.07.2018 DE 102018211406
(43) Veröffentlichungstag der Anmeldung: 22.01.2020
(73) Patentinhaber: KRONES Aktiengesellschaft, 93073 Neutraubling (DE)
(72) Erfinder: Engel, Erwin, 93073 Neutraubling (DE)
(74) Vertreter: Grünecker Patent- und Rechtsanwälte PartG mbB

(56) Entgegenhaltungen:
- DE-A1-102007 021 324
- US-A1- 2005 109 792
- US-A1- 2017 042 178

## Beschreibung

Die vorliegende Erfindung betrifft ein Flüssigkeitsmischsystem zum Mischen von Komponenten für ein flüssiges Produkt gemäß Anspruch 1 und ein Mischverfahren für ein flüssiges Produkt gemäß Anspruch 7.

### Stand der Technik

Flüssigkeitsmischsysteme und entsprechende Verfahren kommen im Stand der Technik insbesondere in der Getränke verarbeitenden Industrie zum Einsatz, wobei hier Produkte aus Wasser unter Zugabe eines oder mehrerer geschmackstragender Komponenten, wie Sirup, hergestellt werden. Um eine gleichbleibende Qualität des aus diesen Komponenten hergestellten Produktes gewährleisten zu können, muss das Mischverhältnis der beizumischenden Komponenten (Sirup oder Ähnliches) zu einer Basiskomponente, wie etwa Wasser, möglichst exakt eingehalten werden. Während die Steuerung der Durchflussmengen an Sirup und Wasser gut einstellbar ist, ist die Konzentration der geschmackstragenden Stoffe im Sirup teilweise Schwankungen unterworfen, die zu einer Veränderung der Qualität des gemischten Produktes führen können.

Dazu schlägt die DE 10 2016 107 730 A1 vor, nach Fertigstellung des flüssigen Produktes (also Mischen der entsprechenden Komponenten) eine Beeinflussung optischer Strahlung in dem Produkt zu messen, um festzustellen, wie dessen Zusammensetzung ist. Dies erlaubt zwar eine zuverlässige Bestimmung der Zusammensetzung des Produkts, kann sich jedoch als nachteilig erweisen, da bei dem Feststellen einer falschen Mischung das entsprechende Produkt gegebenenfalls als Ausschuss zu betrachten ist.

Weiterhin ist aus der US 2005/0109792 A1 eine Vorrichtung zum Steuern und Zubereiten einer gemischten Flüssigkeit bekannt. Hier sind zwei Leitungen vorgesehen, die die einzelnen Komponenten der Flüssigkeit zu einem Mischungsregler befördern, wobei im Mischungsregler und Im Ventilbereich, das die Flüssigkeit aus der Leitung dem Mischungsregler zuführt, ein Sensor angeordnet ist.

Aus der US 20170042178 A1 sind ein System und ein Verfahren zum Herstellen gefrorener Flüssigkeiten bekannt, wobei in den Leitungen, die Wasser und Sirup getrennt zuführen, nach den Mischventilen Sensoren vorgesehen sind, die von einer Steuereinheit zur Steuerung der Flussmenge der einzelnen Komponenten genutzt werden.

### Aufgabe

Ausgehend vom bekannten Stand der Technik besteht die zu lösende technische Aufgabe somit darin, ein Flüssigkeitsmischsystem und ein entsprechendes Verfahren anzugeben, mit dem zuverlässig die Zusammensetzung des flüssigen Produktes bestimmt werden kann und gleichzeitig Ausschuss minimiert wird.

### Lösung

Diese Aufgabe wird durch das erfindungsgemäße Flüssigkeitsmischsystem gemäß Anspruch 1 und das erfindungsgemäße Mischverfahren für ein flüssiges Produkt gemäß Anspruch 7 gelöst. Vorteilhafte Weiterbildungen der Erfindung sind in den Unteransprüchen erfasst.

Das erfindungsgemäße Flüssigkeitsmischsystem zum Mischen von Komponenten für ein flüssiges Produkt umfasst einen Mischungsregler zum Mischen der Komponenten und einen Zulauf umfassend wenigstens zwei separate Leitungen, wobei in einer ersten Leitung eine Basiskomponente und in einer zweiten Leitung eine beizumischende Komponente dem Mischungsregler zugeleitet werden können, wobei stromauf des Mischungsreglers in der zweiten Leitung ein erster Sensor zum Messen der Konzentration einer chemischen Verbindung in der beizumischenden Komponente und ein BRIX-Sensor zum Messen eines BRIX-Wertes der beizumischende Komponente angeordnet sind und wobei eine Steuereinheit vorgesehen ist, die das Mischen der Komponenten durch den Mischungsregler abhängig von der gemessenen Konzentration und dem gemessenen BRIX-Wert steuern kann.

Der BRIX-Wert ist ein allgemein bekannter Wert, bei dem eine Angabe in Grad BRIX bedeutet, dass die Dichte der gemessenen Flüssigkeit der Dichte einer Lösung von Saccharose in Wasser und entspricht, die so viel Gramm Saccharose pro 100 g Lösung enthält. Das BRIX-Signal wird durch die Anwesenheit weiterer chemischer Verbindungen in der beizumischenden Komponente gegebenenfalls verfälscht, so dass ein gemessener BRIX-Wert nicht der realen Konzentration der Geschmack gebenden Stoffe in der beizumischenden Komponente entspricht. Durch die zusätzliche Verwendung des ersten Sensors zum Bestimmen der Konzentration einer chemischen Verbindung einer beizumischenden Komponente kann das eigentliche BRIX-Signal um das Signal des ersten Sensors bereinigt werden, so dass das tatsächliche BRIX-Signal der Geschmack gebenden chemischen Verbindungen (oder auch anderer Verbindungen, die von Interesse sind) bestimmt werden kann. Mit dessen Hilfe kann dann erfindungsgemäß die Menge der Geschmack gebenden Verbindungen in dem zu mischenden Produkt bestimmt und der Mischungsregler gesteuert werden.

In einer Ausführungsform ist vorgesehen, dass der erste Sensor ein spektroskopischer Sensor ist oder einen spektroskopischen Sensor umfasst. Mit Hilfe spektroskopischer Sensoren kann gezielt nach bestimmten chemischen Verbindungen gesucht werden und diese Sensoren können auch ein spezifisches Signal ausgeben, so dass nicht nur die Anwesenheit weiterer chemischer Verbindungen, sondern auch deren Menge bestimmt werden kann.

In einer Weiterbildung dieser Ausführungsform ist der spektroskopische Sensor ausgebildet, Signale chemischer Verbindungen in wenigstens zwei Wellenlängenbereichen im Infrarotbereich zu detektieren. Die interessierenden Verbindungen weisen üblicherweise im Infrarotbereich charakteristische Emissions- oder Absorptionslinien auf, so dass diese mit einer entsprechenden Messung gut erfasst werden können.

In einer weiteren Ausführungsform ist vorgesehen, dass die zweite Leitung von einem Puffertank zu dem Mischungsregler führt und der erste Sensor und der BRIX-Sensor in einer Entfernung zum Puffertank angeordnet sind, die wenigstens der halben Länge, bevorzugt wenigstens 75 % der Länge der Leitung, gemessen entlang der Leitung entspricht. Die Sensoren sind so möglichst am Mischungsregler angeordnet und die Steuerung des Mischungsreglers, abhängig von den gemessenen Werten, betrifft zuverlässig die Flüssigkeitsmenge, die die Sensoren unmittelbar passiert hat. Die unabsichtlich falsche Mischung anderer Komponenten und damit einhergehend die unabsichtliche Produktion von Ausschuss kann so möglichst minimiert werden.

Weiterhin kann eine Abfüllanlage zum Abfüllen eines flüssigen Produktes, wie eines Getränks in einen Behälter bereitgestellt werden, wobei die Abfüllanlage wenigstens eine Abfüllstation, die das Produkt in den Behälter abfüllen kann, und ein Flüssigkeitsmischsystem nach einer der vorangegangenen Ausführungsformen umfasst, wobei das Flüssigkeitsmischsystem mit der Abfüllstation verbunden ist und der Abfüllstation das Produkt zuführen kann. Es versteht sich, dass ein Flüssigkeitsmischsystem für alle Abfüllstationen vorgesehen sein kann, aber auch ein Flüssigkeitsmischsystem separat für jede Abfüllstation. Die entsprechenden Flüssigkeitsmischsysteme können aus einem einzigen bzw. mehreren Puffertanks für jeweils eine Komponente des herzustellenden Produktes gespeist werden.

Es kann ferner vorgesehen sein, dass stromab des Flüssigkeitsmischsystems und stromauf der Abfüllstation ein Puffertank angeordnet ist, wobei das fertig gemischte Produkt vom Flüssigkeitsmischsystem dem Puffertank zugeführt werden und in dem Puffertank verbleiben kann, bis es der Abfüllstation zum Abfüllen in einen Behälter zugeführt wird.

In einer Weiterbildung dieser Ausführungsform ist der Puffertank mit Druck beaufschlagt, insbesondere unter einem Druck eines auszumischenden Gases.

Das erfindungsgemäße Mischverfahren für ein flüssiges Produkt, das aus wenigstens zwei Komponenten besteht, umfasst die Verwendung eines Flüssigkeitsmischsystems, wobei ein Mischungsregler des Flüssigkeitsmischsystems eine Basiskomponente, die dem Mischungsregler aus einer ersten Leitung zugeführt wird, und eine beizumischende Komponente, die dem Mischungsregler aus einer zweiten Leitung zugeführt wird, mischt und eine Steuereinheit den Mischungsregler abhängig von einer, durch einen in der zweiten Leitung angeordneten, ersten Sensor gemessenen Konzentration einer chemischen Verbindung in der beizumischenden Komponente und einem, von einem in der zweiten Leitung angeordneten BRIX-Sensor gemessenen BRIX-Wert in der beizumischenden Komponente steuert. Mit diesem Verfahren wird eine genaue Steuerung der Mischung der Komponenten zum fertigen flüssigen Produkt realisiert.

In einer Ausführungsform steuert die Steuereinheit den Mischungsregler in Echtzeit abhängig von der gemessenen Konzentration der chemischen Verbindung und dem gemessenen BRIX-Wert. Diese Echtzeitsteuerung bedeutet, dass jede Messung durch den ersten Sensor und den BRIX-Sensor zu einer Steuerung des Mischungsreglers führt. Diese Steuerung kann auch darin bestehen, dass festgestellt wird, dass ein Ändern des Mischverhältnisses durch den Mischungsregler nicht notwendig ist. Die Steuerung in Echtzeit bedeutet ferner, dass die Verzögerung zwischen dem Messen der Werte durch die Sensoren und die Steuerung des Mischungsreglers möglichst kurz, bevorzugt im Bereich von wenigen Millisekunden ist.

Dies bringt den Vorteil mit sich, dass das Produkt möglichst immer die passende Konzentration von in der beizumischenden Komponente enthaltenen Verbindungen aufweist.

Es kann weiter vorgesehen sein, dass zur Steuerung des Mischungsreglers eine dem BRIX-Wert entsprechende Menge der beizumischenden Komponente und eine Menge der Basiskomponente jeweils durch die Steuereinheit separat aufsummiert werden und die Steuereinheit den Mischungsregler so steuert, dass die Summe der Menge beizumischender Komponente und die Menge der Basiskomponente einem vorgesehenen Sollwert entspricht. Der vorgegebene Sollwert kann beispielsweise einem gewünschten BRIX-Wert des fertiggestellten Produktes entsprechen, so dass die mengenabhängige Steuerung vorteilhaft entsprechend geregelt werden kann.

In einer Weiterbildung dieser Ausführungsform wird nach einem vorgegebenen Zeitintervall und/oder nach Einsatz einer vorgegebenen Menge der Basiskomponente und/oder der beizumischenden Komponente, der aufsummierte Wert der Menge der beizumischenden Komponenten und der aufsummierte Wert der Menge der Basiskomponenten auf einen Grundwert reduziert. Dies kann beispielsweise durch "kürzen" der bisher angelaufenen Summen realisiert werden oder indem die Werte auf einen vorgegebenen Wert gesetzt werden. Durch "zurücksetzen" kann sichergestellt werden, dass die auflaufenden bzw. angesammelten Mengen der Stoffmenge nicht wesentlich geringer als die bereits gemessene Stoffmenge sind, so dass immer noch ein ausreichendes Steuersignal erstellt werden kann. Eine genaue Steuerung wird so gewährleistet.

Ferner kann vorgesehen sein, dass der erste Sensor ein spektroskopischer Sensor ist oder einen solchen umfasst und die Menge der chemischen Verbindung durch Messung des Emissionsverhaltens der beizumischenden Komponente misst. Solche Messungen sind sehr genau und erlauben eine möglichst fehlerfreie Steuerung des Mischungsreglers.

In einer Weiterbildung dieser Ausführungsform misst der spektroskopische Sensor das Emissionsverhalten in zumindest zwei Wellenlängenbereichen im Infrarotbereich.

Weiterhin kann vorgesehen sein, dass die Basiskomponente Wasser ist und die beizumischende Komponente ein flüssiger Sirup ist. Während auch andere Ausführungen infrage kommen, ist dies die gängigste in der Getränke verarbeitenden Industrie und kann somit vorteilhaft hinsichtlich des Mischungsverhaltens verbessert werden.

Erfindungsgemäß misst der BRIX-Sensor einen BRIX-Wert der beizumischenden Komponente und der erste Sensor misst die Anwesenheit und Menge wenigstens einer anderen chemischen Verbindung, die den von dem BRIX-Sensor gemessenen Wert beeinflussen kann. Ein Signal einer chemischen Verbindung, das den von dem BRIX-Sensor gemessenen Wert beeinflussen könnte, kann so vorteilhaft aus dem Messwert des BRIX-Sensors herausgerechnet werden.

Erfindungsgemäß nutzt die Steuereinheit zur Steuerung des Mischungsreglers den vom BRIX-Sensor gemessenen Wert, der basierend auf dem vom ersten Sensor gemessenen Wert korrigiert wird, zur Steuerung des Mischungsreglers.

Kurze Beschreibung der Figuren
Figur 1 zeigt eine schematische Darstellung eines Flüssigkeitsmischsystems gemäß einer Ausführungsform
Figur 2 zeigt eine schematische Darstellung einer Ausführungsform einer Abfüllanlage umfassend das erfindungsgemäße Flüssigkeitsmischsystem.

### Ausführliche Beschreibung

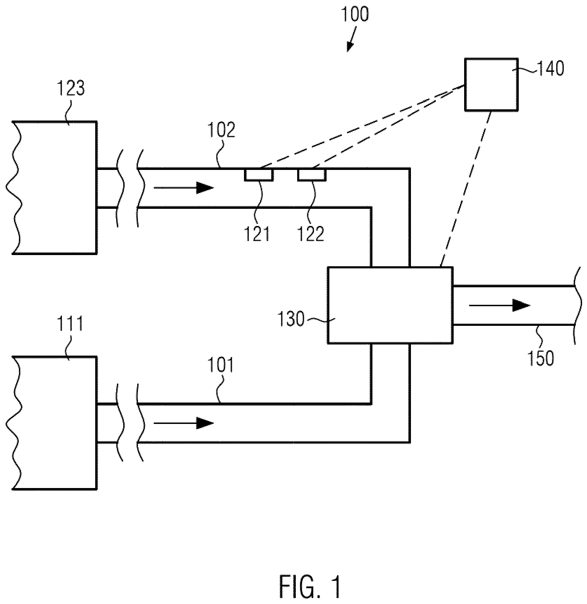

In Figur 1 ist schematisch ein Flüssigkeitsmischsystem 100 gemäß einer Ausführungsform der Erfindung dargestellt. Das Flüssigkeitsmischsystem umfasst eine erste Leitung 101 sowie eine zweite Leitung 102, die Komponenten eines herzustellenden, flüssigen Produktes einem Mischungsregel 130 zuführen. Dieser Mischungsregler mischt dann die zugeführten Komponenten und kann sie über die Ableitung 150 ausgeben. In der Ableitung 150 wird also das aus den in den Leitungen 101 und 102 geförderten Komponenten bestehende Produkt vom Mischungsregel entlang der dargestellten Pfeilrichtung abtransportiert, beispielsweise zu einer Abfüllstation einer Abfüllanlage, um es in einen Behälter einzufüllen.

Die erste Leitung 101 transportiert dabei gemäß einer Ausführungsform eine Basiskomponente, die die (mengenmäßige) Grundlage für das herzustellende, flüssige Produkt bilden kann. Bei dieser Basiskomponente kann es sich beispielsweise um Wasser handeln. Auch andere Flüssigkeiten sind hier denkbar.

In der zweiten Leitung 102 wird eine der Basiskomponente beizumischende Komponente transportiert. Bei dieser beizumischenden Komponente kann es sich ebenfalls um eine Flüssigkeit handeln. Hier kommen jedoch auch Gase, wie beispielsweise CO₂ oder mit Gasen versetzte Flüssigkeiten infrage. Wird eine Flüssigkeit in der Leitung 102 transportiert, kann es sich um einen Sirup mit Geschmack gebenden Inhaltsstoffen handeln, wie dieser bei der Produktion von Fertiggetränken häufig verwendet wird.

Die Leitung 101 und die Leitung 102 können jeweils mit einem geeigneten Vorlagebehälter (auch Puffertank genannt) für die Komponenten (also Basiskomponente für die Leitung 101 und beizumischende Komponente für die Leitung 102) verbunden sein. Diese Vorlagebehälter 111 und 123 beispielsweise große gekühlte Flüssigkeitsspeicher, aus denen die jeweilige Komponente entnommen werden kann. Alternativ oder zusätzlich können auch ein oder mehrere Behälter oder Bereiche vorgesehen sein, in denen die Basiskomponente (wie Wasser) entgast wird, bevor sie der Leitung 101 zugeführt wird.

Wenn auch hier nicht dargestellt, kann stromab des Mischungsreglers in der bzw. nach der Ableitung 150 entweder eine Abfüllstation angeordnet sein, von dem aus das fertig gemischte Produkt in einen Behälter abgefüllt wird, oder es können ein oder mehrere weitere Puffertanks (auch Pufferbehälter) vorgesehen sein, in die das fertig gemischte Produkt von der Ableitung geführt werden kann, um dort beispielsweise für die weitere Verwendung zwischengelagert zu werden. Es kann auch vorgesehen sein, dass ein solcher Puffertank zwischen dem Mischungsregler und einem Abfüllorgan vorgesehen ist, sodass das fertige Produkt zuerst den Puffertank passiert und darin ggf. zwischengelagert wird und anschließend aus dem Puffertank der Abfüllstation zugeführt wird.

Während in der hier dargestellten Ausführungsform lediglich eine erste Leitung 101 für eine Basiskomponente und eine zweite Leitung 102 für eine beizumischende Komponente dargestellt sind, versteht es sich, dass auch mehr als eine Leitung für eine darin geführt Basiskomponente vorgesehen sein kann und auch mehr als eine Leitung für eine beizumischende Komponente. Beispielsweise kann neben der einen zweiten Leitung 102, die in Figur 1 dargestellt ist, eine weitere Leitung mit dem Mischungsregler verbunden sein, in der ebenfalls eine beizumischende Komponente geführt wird. Bei dieser kann es sich dann um einen anderen Sirup handeln oder um ein Gas oder jegliche andere infrage kommende Flüssigkeit.

Erfindungsgemäß ist vorgesehen, dass in der zweiten Leitung 102 (bzw. in jeder zweiten Leitung, in der eine der Basiskomponente beizumischende Komponente transportiert wird) bzw. verbunden mit der jeweiligen Leitung ist ein erster Sensor 121 angeordnet ist, der ausgebildet ist, die Konzentration einer chemischen Verbindung in der beizumischenden Komponente zu messen. Bei diesem Sensor kann es sich beispielsweise um einen spektroskopischen Sensor handeln, der das Emissions- oderAbsorptionsverhalten der beizumischenden Komponente (in einem bestimmten Wellenlängenbereich) wahrnehmen bzw. detektieren kann und anhand dessen das Vorhandensein und die Konzentration zumindest einer chemischen Verbindung bestimmen kann. Besonders bevorzugt handelt es sich bei der chemischen Verbindung um Zucker oder Verbindungen, die in der Lebensmittelindustrie als Zuckerersatz verwendet werden, wie z. B. Stevia.

Weiterhin ist erfindungsgemäß in der zweiten Leitung ein BRIX-Sensor 122 angeordnet. Dieser BRIX-Sensor ist ausgebildet, ein Signal auszugeben, das geeignet ist, die Dichte der in der Leitung 102 geführten beizumischenden Komponente in Grad Brix zu bestimmen. Hier gibt die Messung in Grad Brix die Dichte der gemessenen Flüssigkeit in einer Form an, dass die Dichte bezogen auf die Dichte einer Lösung von Saccharose in Wasser, die so viele Gramm Saccharose pro 100 g Lösung enthält, angegeben wird. Dies bedeutet beispielsweise, eine Flüssigkeit mit einem BRIX-Wert von 30° entspricht hinsichtlich ihrer Dichte einer Lösung von Saccharose in Wasser, die 30 g Saccharose in 100 g der Lösung aus Saccharose und Wasser, also nur noch 70 g Wasser enthält.

Hierzu misst der BRIX-Sensor (möglicherweise stoffunspezifisch) die Dichte der beizumischenden Komponente, bzw. allgemein einer Flüssigkeit. Bei einer Flüssigkeit, die lediglich einen zusätzlichen Stoff neben Wasser enthält, reicht die Messung des BRIX-Wertes aus, um auf die in der Flüssigkeit enthaltenen Mengen dieses bestimmten Stoffes Rückschlüsse zu ziehen.

Da jedoch die beizumischende Komponente üblicherweise nicht nur Geschmack gebende chemische Verbindungen (Aromen oder ähnliches) enthält, sondern gleichzeitig Zucker oder, wie oben erwähnt, Zuckerersatzstoffe, kann das BRIX-Signal durch die Anwesenheit der Zucker oder Zuckerersatzstoffe verfälscht werden, und somit die Bestimmung der Konzentration der Geschmack gebenden Verbindung ungenau werden.

Zu diesem Zweck werden in einer Ausführungsform der von dem ersten Sensor 121 und dem BRIX-Sensor 122 gemessene Werte einer Steuereinheit 140 zugeführt, die anhand des von dem ersten Sensor 122 gemessenen Wert für die Konzentration der chemischen Verbindung und dem von dem BRIX-Sensor 122 gemessenen BRIX-Wert der beizumischenden Komponente den Mischungsregler 130 so steuert, dass die Mischung der beizumischenden Komponenten mit der Basiskomponente 101 zu dem flüssigen Produkt möglichst einen konstanten BRIX-Wert bzgl. einer gewünschten Verbindung in der beizumischenden Komponente aufweist, der unabhängig von Schwankungen des BRIX-Wertes der beizumischenden Komponente ist.

Erfindungsgemäß wird zu diesem Zweck das Signal des ersten Sensors 121, mit dem beispielsweise die Konzentration von Zucker oder Zuckerersatz wie Stevia gezielt in der beizumischenden Komponente ermittelt wird, genutzt, um den von dem BRIX-Sensor 122 gemessenen BRIX-Wert der beizumischenden Komponente zu korrigieren.

Dazu kann beispielsweise in einer Ausführungsform vorgesehen sein, dass der von dem ersten Sensor 121 gemessene Wert für die Konzentration der chemischen Verbindung in einen dementsprechenden BRIX-Wert umgerechnet wird und dieser BRIX-Wert von dem in dem Sensor 122 gemessenen BRIX-Wert der beizumischenden Komponente mit Hilfe der Steuereinheit 140 subtrahiert wird, so dass der nun erhaltene BRIX-Wert dem BRIX-Wert einer bestimmten chemischen Verbindung in der beizumischenden Komponente, insbesondere einer Geschmack gebenden Komponente bzw. Geschmack gebenden chemischen Verbindung, entspricht. Ist dieser BRIX-Wert wiederum bekannt, kann das Verhältnis von beizumischender Komponente zu Basiskomponente durch Steuerung des Mischungsreglers so eingestellt werden, dass der BRIX-Wert des resultierenden flüssigen Produktes (nur bezogen auf die bestimmte chemische Verbindung) einen vorgegebenen Wert annimmt.

Während in der in Figur 1 dargestellten Ausführungsform nur ein Sensor 121 vorgesehen ist, können auch mehrere Sensoren vorgesehen sein, die jeweils gezielt die Konzentration bestimmter Inhaltsstoffe in der beizumischenden Komponente messen, die beispielsweise Einfluss auf den von dem BRIX-Sensor 122 gemessenen Wert haben. Sämtliche dieser gemessenen Werte können dann genutzt werden, um das Signal des BRIX-Sensors zu korrigieren.

Besonders bevorzugt ist der Sensor 121 bzw. jeder entsprechende Sensor als spektroskopischer Sensor ausgebildet und kann daher gezielt anhand der Messung bestimmter Emissions- oder Absorptionslinien das Vorhandensein und die Konzentration chemischer Verbindungen in der beizumischenden Komponente bestimmen. Somit kann gezielt ein Korrekturwert für den von dem BRIX-Sensor gemessenen Wert bestimmt werden und eine Steuerung bzw. Regelung des Mischungsreglers 130 abhängig von dem gemessenen BRIX-Wert erfolgen.

Hier kommen insbesondere Sensoren infrage, die eine Messung auf spektroskopische Weise im Infrarotbereich und besonders bevorzugt in zumindest zwei Wellenlängenbereichen des Infrarotbereichs ermöglichen. Der Infrarotbereich umfasst dabei üblicherweise Wellenlängen im Bereich von 10⁻³ m bis 7,8 × 10⁻⁷ m bzw. 3 × 10¹¹ Hz bis 4 × 10¹⁴ Hz. Die zwei Wellenlängenbereiche können voneinander getrennte Teile dieses Spektrums sein oder auch teilweise überlappen. Hiermit kann eine Identifikation chemischer Verbindungen, wie Mehrfachzucker, besonders zuverlässig erfolgen, da nicht nur die Emission bzw. Absorption auf eine Wellenlänge beschränkt gemessen wird, sondern in zwei Wellenlängenbereichen.

Die Steuereinheit steuert bevorzugt den Mischungsregler in Echtzeit, abhängig von den von dem ersten Sensor 121 und dem BRIX-Sensor 122 ermittelten Werten und dem gegebenenfalls durch die Steuereinheit, anhand des von dem ersten Sensor 121 gemessenen Wertes, des berechneten Korrekturwertes für den von dem BRIX-Sensor 122 gemessenen Wert. Die Steuerung in Echtzeit umfasst, dass jeder Messung durch den ersten Sensor und dem BRIX-Sensor eine Steuerung des Mischungsreglers durch die Steuereinheit zugeordnet wird. Anhand eines Wertepaares, das aus einem von dem ersten Sensor gemessenen Wert und dem vom BRIX-Sensor gemessenen Wert besteht, wird die Steuereinheit also gemäß einer bevorzugten Ausführungsform den Mischungsregler steuern, um das Verhältnis zwischen beizumischender Komponente und Basiskomponente einzustellen. Dabei kann es sein, dass der (um den von dem ersten Sensor 121 gemessenen Wert korrigierte) BRIX-Wert der beizumischenden Komponente über mehrere Messungen konstant bleibt. In diesem Fall umfasst die Steuerung des Mischungsreglers durch die Steuereinheit keine Änderungen des Mischungsverhältnisses zwischen beizumischender Komponente und Basiskomponente, sofern der entsprechende BRIX-Wert einem vorgegebenen Sollwert entspricht. Dennoch führt die Steuereinheit zumindest eine Überprüfung dahingehend aus, ob der gemessene BRIX-Wert (korrigiert um den aus dem von dem ersten Sensor ermittelten, abgeleiteten Korrekturwert) dem Sollwert entspricht. Auch dieses Vorgehen ist also als Teil der Echtzeitsteuerung des Mischungsreglers zu verstehen.

Dass die Steuerung des Mischungsreglers in Echtzeit erfolgt, umfasst bevorzugt, dass zwischen der Messung durch die Sensoren 121 und 122 und einer Steuerung des Mischungsreglers 130 eine Zeitspanne liegt, die kleiner 1s, insbesondere kleiner als 0,1 s, bevorzugt kleiner als 10⁻² s ist. So kann vermieden werden, dass in der Zwischenzeit eine große Menge an gegebenenfalls nicht dem Sollwert entsprechendem flüssigem Produkt hergestellt wird.

Besonders bevorzugt ist hier eine Ausführungsform, bei der der erste Sensor 121 und der BRIX-Sensor 122 möglichst nahe an dem Mischungsregler angeordnet sind, so dass das Flüssigkeitsvolumen zwischen den Sensoren und dem Mischungsregler möglichst gering ist und daher eine mögliche Fehlmischung dieses Volumens aufgrund der von den Sensoren gemessenen Werte eines diesem Volumen erst nachfolgenden Volumens der beizumischenden Komponente möglichst klein bleibt. Hat die zweite Leitung 102 beispielsweise die Länge I, gemessen von dem Ausgang des Vorlagebehälters 123 entlang des Verlaufs der zweiten Leitung 102 bis zum Mischungsregler 130, so können der erste Sensor 121 und der BRIX-Sensor 122 in einem Bereich der zweiten Leitung 102, angeordnet sein, der in einer Entfernung, gemessen entlang des Verlaufs der zweiten Leitung 102 angeordnet ist, die wenigstens der Hälfte der Länge I der Leitung 102 entspricht. Besonders bevorzugt sind die Sensoren 121 und 122, in einer Entfernung zum Produktvorlagebehälter gemessen, entlang der Leitung 102, angeordnet, die wenigstens 75 % der Gesamtlänge I der zweiten Leitung 102 entspricht.

Um eine möglichst effiziente Steuerung des Mischungsreglers 130 durch die Steuereinheit zu gewährleisten, kann vorgesehen sein, dass die Steuerung nicht anhand aktueller Stoffströme (also Stoffmenge pro Zeiteinheit) erfolgt, sondern abhängig von der gesamten Stoffmenge, die aus der beizumischenden Komponente und der Basiskomponente entnommen wird. Um dies zu gewährleisten, wird die Steuerung des Mischungsreglers so ausgeführt, dass das Mischungsverhältnis nach der gesamten verwendeten Stoffmenge gesteuert wird. Für ein fertiges flüssiges Produkt ist beispielsweise bei gegebenem Soll-BRIX-Wert ein bestimmtes Mengenverhältnis zwischen der beizumischenden Komponente und der Basiskomponente vorgesehen. Zur Regelung der Stoffsummen wird daher bevorzugt, die Menge an beizumischender Komponente, insbesondere die gesamte Stoffmenge an Geschmack gebender chemischer Verbindung und separat dazu die Menge der Basiskomponente aufsummiert. Durch die Steuereinheit wird dann anhand der von den Sensoren gemessenen Werte die Menge der beizumischenden Komponente so gesteuert, dass das gesamte Mengenverhältnis zwischen der Geschmack gebenden Verbindung in der beizumischenden Komponente und der Basiskomponente stets konstant ist. Verringert sich beispielsweise der BRIX-Wert der Geschmack gebenden Verbindungen in der beizumischenden Komponente aus irgendeinem Grund, so erhöht die Steuereinheit den Zufluss der beizumischenden Komponente im Mischungsregler und verringert gegebenenfalls den Zufluss der Basiskomponente, so dass das Verhältnis zwischen Geschmack gebenden Komponenten in der beizumischenden Komponente und Basiskomponente weiterhin konstant bleibt. Hier ist es besonders vorteilhaft, wenn pro beizumischender Komponente nur eine relevante chemische Verbindung vorliegt, für die eine BRIX-Wert-abhängige Steuerung erfolgen soll. So können Schwankungen in der Konzentration einer relevanten chemischen Verbindung einfacher korrigiert werden.

Durch diese Registerregelung läuft über die Zeit eine sehr große Stoffmenge (Kilogramm bis Tonnen zumindest der Basiskomponente) an, wohingegen der Zulauf an Sirup pro Sekunde üblicherweise nur wenige Milliliter bis Liter beträgt. Dies kann dazu führen, dass eine genaue Steuerung der Verhältnisse zwischen Basiskomponente und beizumischender Komponente nur noch schwierig durchführbar ist, da die geringen Abweichungen aufgrund der großen, gesamten angelaufenen Summe nur noch schwierig im Computer mit hoher Genauigkeit berechnet werden können. Insbesondere ist die Differenzbildung dann ungenau. Aus diesem Grund können in bestimmten Zeitintervallen oder besonders bevorzugt nach Erreichen einer bestimmten Stoffmenge die angelaufenen Summen auf einen bestimmten Grundwert reduziert werden. Dieser Grundwert kann eine beliebige Zahl sein. Besonders bevorzugt ist es jedoch, wenn der Grundwert einem möglichst kleinen Vielfachen des Verhältnisses zwischen Basiskomponente und beizumischender Komponente entspricht. Beispielsweise kann der Grundwert bei einem angestrebten Mischungsverhältnis von 1 : 3 der beizumischenden Komponente zur Basiskomponente 1I für die beizumischende Komponente und 3I für die Basiskomponente betragen. Auch andere Grundwerte sind hier denkbar und können je nach Zweckmäßigkeitsgesichtspunkten gewählt werden.

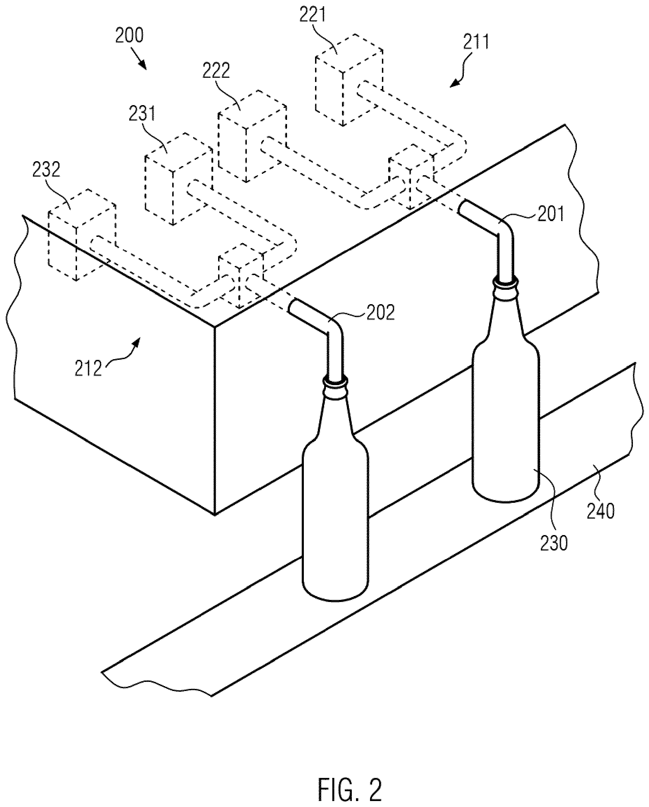

Figur 2 zeigt eine Implementierung des Flüssigkeitsmischsystems gemäß den oben beschriebenen Ausführungsformen in einer Abfüllanlage 200. Diese umfasst mehrere Abfüllstationen 201 und 202 und ist in der hier dargestellten Ausführungsform als Linearfüller ausgebildet. Die zu befüllenden Behälter 230 (beispielsweise Flaschen, Dosen oder dergleichen) werden entlang einer Förderstrecke 240, die beispielsweise als Transportband ausgebildet sein kann, transportiert und ihr Öffnungsbereich wird im Bereich einer Abfüllstation 201 bzw. 202 positioniert, so dass ein Abfüllorgan (Füllventil oder dergleichen) ein flüssiges Produkt in die Behälter einfüllen kann. In der hier dargestellten Ausführungsform ist jeder Abfüllstation ein Flüssigkeitsmischsystem 211 und 212 gemäß oben beschriebener Ausführungsformen zugeordnet. Dabei umfasst jedes der Flüssigkeitsmischsystem 211 und 212 einen separaten Mischungsregler und die dazu mit Bezug auf die Figur 1 beschriebenen Leitungen und Vorlagebehälter 221 und 222 für das Flüssigkeitsmischsystem 211 und 231 und 232 für das Flüssigkeitsmischsystem 212. Wie bereits beschrieben, werden in den Flüssigkeitsvorlagebehältern die Basiskomponente und die ein oder mehrere beizumischenden Komponenten vorgehalten.

Während die Ausführungsform gemäß Figur 2 den Vorteil bietet, dass für jede Abfüllstation das flüssige Produkt separat gemischt werden kann, und somit auch eine Individualisierung der in die einzelnen Behälter abgefüllten Produkte möglich ist, ist diese Ausführungsform hinsichtlich des Materialeinsatzes vergleichsweise aufwendig.

In einer alternativen Ausführungsform umfasst daher die Abfüllanlage 200 lediglich ein einziges Flüssigkeitsmischsystem, wobei die in der Figur 1 dargestellte Leitung 150, die das durch den Mischungsregler fertig gemischte, flüssige Produkt aus dem Mischungsregler abführt, jede Abfüllstation beschickt. Die Ableitung umfasst entsprechend mehrere Verzweigungen.

Die in Figur 2 dargestellte Ausführungsform ist lediglich beispielhaft und beschreibt einen Linearfüller als Abfüllanlage. Auch andere Ausführungsformen sind denkbar, bei denen das Befüllen der Behälter mit dem flüssigen Produkt unter Zuhilfenahme eines entsprechenden Flüssigkeitsmischsystems gemäß den oben beschriebenen Ausführungsformen erfolgt. Beispielsweise kann die Abfüllanlage als Karussell ausgebildet oder ein solches umfassend vorgesehen sein. Entlang der Peripherie des Karussells mitdrehbar können dann entsprechende Abfüllstationen angeordnet sein, in die ein Behälter zum Zwecke der Befüllung mit dem flüssigen Produkt aufgenommen wird. Die Behälter können dann beispielsweise über geeignete Zufördereinrichtungen und Abfördereinrichtungen, wie Drehsterne, dem Karussell zugeführt und aus dem Karussell abgeführt werden.

## Patentansprüche

1. Flüssigkeitsmischsystem (100) zum Mischen von Komponenten für ein flüssiges Produkt, umfassend einen Mischungsregler (130) zum Mischen der Komponenten und einen Zulauf umfassend wenigstens zwei separate Leitungen (101, 102), wobei in einer ersten Leitung (101) eine Basiskomponente und in einer zweiten Leitung (102) eine beizumischende Komponente dem Mischungsregler zugeleitet werden können, **dadurch gekennzeichnet, dass** stromauf des Mischungsreglers in der zweiten Leitung ein erster Sensor (121) zum Messen der Konzentration einer ersten chemischen Verbindung in der beizumischende Komponente und ein BRIX-Sensor (122) zum Messen eines BRIX-Wertes der beizumischende Komponente angeordnet sind und wobei eine Steuereinheit (140) vorgesehen ist, die das Mischen der Komponenten durch den Mischungsregler abhängig von der gemessenen Konzentration und dem gemessenen BRIX-Wert steuern kann, wobei der gemessene Brix-Wert durch die Geschmack gebende chemische Verbindung und die erste chemische Verbindung beeinflusst werden kann, und der erste Sensor (121) die Anwesenheit und Menge der ersten chemischen Verbindung messen kann, die den von dem BRIX-Sensor gemessenen Wert beeinflussen kann, und wobei die Steuereinheit (140) ausgebildet ist, zur Steuerung des Mischungsreglers den vom BRIX-Sensor (122) gemessenen Wert basierend auf dem vom ersten Sensor (121) gemessenen Wert zu korrigieren und den korrigierten Wert des BRIX-Sensors als BRIX-Wert der Geschmack gebenden chemischen Verbindung der beizumischenden Komponente zur Steuerung des Mischungsreglers (130) zu nutzen.

2. Flüssigkeitsmischsystem (100) nach Anspruch 1, wobei der erste Sensor (121) ein spektroskopischer Sensor ist oder einen spektroskopischen Sensor umfasst.

3. Flüssigkeitsmischsystem (100) nach Anspruch 2, wobei der spektroskopische Sensor ausgebildet ist, Signale chemischer Verbindungen in wenigstens zwei Wellenlängenbereichen im Infrarotbereich zu detektieren.

4. Flüssigkeitsmischsystem (100) nach einem der Ansprüche 1 bis 3, wobei die zweite Leitung (122) von einem Puffertank (123) zu dem Mischungsregler (130) führt und der erste Sensor (121) und der BRIX-Sensor (122) in einer Entfernung zum Puffertank angeordnet sind, der wenigstens der halben Länge, bevorzugt wenigstens 75% der Länge der Leitung, gemessen entlang der Leitung, entspricht.

5. Abfüllanlage (200) zum Abfüllen eines flüssigen Produktes, wie eines Getränks, in einen Behälter (230), mit wenigstens einer Abfüllstation (201, 202), die das Produkt in den Behälter abfüllen kann, und einem Flüssigkeitsmischsystem (100) nach einem der Ansprüche 1 bis 4, wobei das Flüssigkeitsmischsystem mit der Abfüllstation verbunden ist und der Abfüllstation das Produkt zuführen kann.

6. Abfüllanlage (200) nach Anspruch 5, wobei stromab des Flüssigkeitsmischsystems (100) und stromauf der Abfüllstation (201, 202) ein Puffertank angeordnet ist, wobei das fertig gemischte Produkt vom Flüssigkeitsmischsystem dem Puffertank zugeführt werden und in dem Puffertank verbleiben kann, bis es der Abfüllstation (201, 202) zum Abfüllen in einen Behälter zugeführt wird.

7. Mischverfahren für ein flüssiges Produkt, das aus wenigstens zwei Komponenten besteht, unter Verwendung eines Flüssigkeitsmischsystems (100), wobei ein Mischungsregler (130) des Flüssigkeitsmischsystems eine Basiskomponente, die dem Mischungsregler aus einer ersten Leitung (101) des Flüssigkeitsmischsystems zugeführt wird, und eine beizumischende Komponente, die dem Mischungsregler aus einer zweiten Leitung (102) des Flüssigkeitsmischsystems zugeführt wird, mischt, **dadurch gekennzeichnet, dass** eine Steuereinheit (140) des Flüssigkeitsmischsystems den Mischungsregler abhängig von einer, durch einen in der zweiten Leitung angeordneten, ersten Sensor (121) gemessenen Konzentration einer ersten chemischen Verbindung in der beizumischenden Komponente und einem, von einem in der zweiten Leitung angeordneten BRIX-Sensor (122) gemessenen BRIX-Wert der beizumischenden Komponente steuert, wobei der gemessene Brix-Wert durch die Geschmack gebende chemische Verbindung und die erste chemische Verbindung beeinflusst werden kann, und der erste Sensor (121) die Anwesenheit und Menge der ersten chemischen Verbindung misst, die den von dem BRIX-Sensor gemessenen Wert beeinflussen kann, und wobei die Steuereinheit (140) zur Steuerung des Mischungsreglers den vom BRIX-Sensor (122) gemessenen Wert basierend auf dem vom ersten Sensor (121) gemessenen Wert korrigiert und den korrigierten Wert des BRIX-Sensors als BRIX-Wert der Geschmack gebenden chemischen Verbindung der beizumischenden Komponente zur Steuerung des Mischungsreglers (130) nutzt.

8. Mischverfahren nach Anspruch 7, wobei die Steuereinheit (140) den Mischungsregler (130) in Echtzeit abhängig von der gemessenen Konzentration der chemischen Verbindung und dem gemessenen BRIX-Wert steuert.

9. Mischverfahren nach Anspruch 7 oder 8, wobei zur Steuerung des Mischungsreglers (130) eine dem BRIX-Wert entsprechende Menge der beizumischenden Komponente und eine Menge der Basiskomponente, jeweils durch die Steuereinheit (140) separat aufsummiert werden und wobei die Steuereinheit den Mischungsregler so steuert, dass die Summe der Menge beizumischender Komponenten und der Menge der Basiskomponente einem vorgesehenen Soll-Wert entspricht.

10. Mischverfahren nach Anspruch 9, wobei nach einem vorgegebenen Zeitintervall und nach Einsatz einer vorgegebenen Menge der Basiskomponente und/oder der beizumischenden Komponente der aufsummierte Wert der Menge der beizumischenden Komponente und der aufsummierte Wert der Menge der Basiskomponente auf einen Grundwert reduziert werden.

11. Mischverfahren nach einem der Ansprüche 7 bis 10, wobei der erste Sensor (121) ein spektroskopischer Sensor ist oder einen solchen umfasst und die Menge der chemischen Verbindung durch Messung des Emissionsverhaltens der beizumischenden Komponente misst.

12. Mischverfahren nach Anspruch 11, wobei der spektroskopische Sensor das Emissionsverhalten in zumindest zwei Wellenlängenbereichen im Infrarotbereich misst.

13. Mischverfahren nach einem der Ansprüche 7 bis 12, wobei die Basiskomponente Wasser ist und die beizumischende Komponente ein flüssiger Sirup ist.

## Claims

1. Fluid mixing system (100) for mixing components for a fluid product comprising a mixing regulator (130) for mixing said components and a feed comprising at least two separate conduits (101, 102), wherein a base component can be supplied to said mixing regulator in a first conduit (101) and a component to be admixed in a second conduit (102), **characterized in that** a first sensor (121) for measuring the concentration of a first chemical compound in said component to be admixed and a BRIX sensor(122) for measuring a BRIX value of said component to be admixed are disposed upstream of said mixing regulator in said second conduit, and where a control unit (140) is provided which can control the mixing process of said components by said mixing regulator in dependence of the concentration measured and the BRIX value measured, wherein the measured BRIX value can be influenced by the BRIX value of the flavouring chemical compound and the first chemical compound, and said first sensor (121) can measure the presence and quantity of the first chemical compound that can affect the value measured by said BRIX sensor, and where said control unit (140) is configured, for controlling said mixing regulator, to correct the value measured by said BRIX sensor (122) based on the value measured by said first sensor (121) and to use the corrected value of the BRIX sensor as BRIX value of the flavouring chemical compound of the to be admixed component for controlling said mixing regulator (130).

2. Fluid mixing system (100) according to claim 1, where said first sensor (121) is a spectroscopic sensor or comprises a spectroscopic sensor.

3. Fluid mixing system (100) according to claim 2, where said spectroscopic sensor is adapted to detect signals of chemical compounds in at least two wavelength ranges in the infrared range.

4. Fluid mixing system (100) according to one of the claims 1 to 3, where said second conduit (122) leads from a buffer tank (123) to said mixing regulator (130), and said first sensor (121) and said BRIX sensor (122) are arranged a distance to said buffer tank which corresponds to at least half the length, preferably to at least 75% of the length of said conduit, measured along said conduit.

5. Filling system (200) for filling a fluid product, such as a beverage, into a container (230) with at least one filling station (201, 202) which can fill said product into said container, and a fluid mixing system (100) according to one of the claims 1 to 4, where said fluid mixing system is connected to said filling station and can supply the product to said filling station.

6. Filling system (200) according to claim 5, where a buffer tank is arranged downstream of said fluid mixing system (100) and upstream of said filling station (201, 202), where the ready-mixed product can be supplied from said fluid mixing system to said buffer tank and remain in said buffer tank until it is supplied to said filling station (201, 202) to be filled into a container.

7. Mixing method for a fluid product which consists of at least two components using a fluid mixing system (100), where a mixing regulator of said fluid mixing system mixes a base component, which is supplied to said mixing regulator (130) from a first conduit (101) of said fluid mixing system, and a component to be admixed, which is supplied to said mixing regulator from a second conduit (102) of said fluid mixing system, **characterized in that** a control unit (140) of said fluid mixing system controls said mixing regulator in dependence of a concentration of a first chemical compound in said component to be admixed which was measured by a first sensor (121) disposed in said second conduit and a BRIX value in said component to be admixed which was measured by a BRIX sensor (122) disposed in said second conduit, where the measured BRIX value can be affected by the flavouring chemical compound and the first chemical component and said first sensor (121) measures the presence and quantity of the first chemical compound that can affect the value measured by said BRIX sensor, and where, for controlling said mixing regulator, said control unit (140) corrects the value measured by said BRIX sensor (122) based on the value measured by said first sensor (121) and uses the corrected value of the BRIX sensor as BRIX value of the flavouring chemical compound of the to be admixed component for controlling said mixing regulator (130).

8. Mixing method according to claim 7, where said control unit (140) controls said mixing regulator (130) in real time in dependence of the concentration of the chemical compound measured and the BRIX value measured.

9. Mixing method according to claim 7 or 8, where a quantity of component to be admixed corresponding to the BRIX value and a quantity of the base component are each summed up separately by said control unit (140) and where said control unit controls said mixing regulator such that the sum of the quantity of component to be admixed and the quantity of said base component corresponds to an intended target value.

10. Mixing method according to claim 9, where the summed up value of the quantity of component to be admixed and the summed up value of the quantity of said base component are reduced to a basic value after a predetermined time interval and/or after usage of a predetermined quantity of said base component and/or said component to be admixed.

11. Mixing method according to one of the claims 7 to 10, where said first sensor (121) is or comprises a spectroscopic sensor and measures the quantity of said chemical compound by measuring the emission behavior of said component to be admixed.

12. Mixing method according to claim 11, where said spectroscopic sensor measures the emission behavior in at least two wavelength ranges in the infrared range.

13. Mixing method according to one of the claims 7 to 12, where said base component is water and said component to be admixed is a fluid syrup.

## Revendications

1. Système de mélange de liquides (100) pour mélanger des composants pour un produit liquide, comprenant un régulateur de mélange (130) pour mélanger les composants et une entrée comprenant au moins deux conduites séparées (101, 102),dans lequel un composant de base peut être amené au régulateur de mélange dans une première conduite (101) et un composant à mélanger peut être amené dans une seconde conduite (102), **caractérisé en ce qu'**en amont du régulateur de mélange, dans la seconde conduite, sont agencés un premier capteur (121) pour mesurer la concentration d'un premier composé chimique dans le composant à mélanger et un capteur BRIX (122) pour mesurer une alerte BRIX du composant à mélanger, et dans lequel une unité de commande (140) est prévue, qui peut commander le mélange des composants par le régulateur de mélange en fonction de la concentration mesurée et de la valeur BRIX mesurée, dans lequel la valeur BRIX mesurée peut être influencée par le composé chimique aromatique et le premier composé chimique, et le premier capteur (121) peut mesurer la présence et la quantité du premier composé chimique pouvant influencer la valeur mesurée par le capteur BRIX, et dans lequel l'unité de commande (140) est conçue pour commander le régulateur de mélange afin de corriger la valeur mesurée par le capteur BRIX (122) sur la base de la valeur mesurée par le premier capteur (121) et pour utiliser la valeur corrigée du capteur BRIX en tant que valeur BRIX du composé chimique aromatique du composant à mélanger pour commander le régulateur de mélange (130).

2. Système de mélange de liquides (100) selon la revendication 1, dans lequel le premier capteur (121) est un capteur spectroscopique ou comprend un capteur spectroscopique.

3. Système de mélange de liquides (100) selon la revendication 2, dans lequel le capteur spectroscopique est conçu pour détecter des signaux de composés chimiques dans au moins deux plages de longueur d'onde dans la plage infrarouge.

4. Système de mélange de liquides (100) selon l'une quelconque des revendications 1 à 3, dans lequel la seconde conduite (122) part d'un réservoir tampon (123) jusqu'au régulateur de mélange (130), et le premier capteur (121) et le capteur BRIX (122) sont agencés à une distance du réservoir tampon qui correspond à au moins la moitié de la longueur, de préférence à au moins 75 % de la longueur de la conduite mesurée le long de la conduite.

5. Installation de remplissage (200) pour remplir un récipient (230) avec un produit liquide, tel qu'une boisson, comprenant au moins une station de remplissage (201, 202) qui peut remplir le récipient avec le produit, et un système de mélange de liquides (100) selon l'une quelconque des revendications 1 à 4, dans laquelle le système de mélange de liquides est connecté à la station de remplissage et peut amener le produit à la station de remplissage.

6. Installation de remplissage (200) selon la revendication 5, dans lequel un réservoir tampon est agencé en aval du système de mélange de liquides (100) et en amont de la station de remplissage (201, 202), dans laquelle le produit prêt à être mélangé est amené depuis le système de mélange de liquides jusqu'au réservoir tampon et peut rester dans le réservoir tampon jusqu'à ce qu'il soit amené à la station de remplissage (201, 202) pour remplir un récipient.

7. Procédé de mélange pour un produit liquide, qui consiste en au moins deux composants, en utilisant un système de mélange de liquides (100), dans lequel un régulateur de mélange (130) du système de mélange de liquides mélange un composant de base, qui est amené au régulateur de mélange à partir d'une première conduite (101) du système de mélange de liquides, et un composant à mélanger, qui est amené au régulateur de mélange à partir d'une seconde conduite (102) du système de mélange de liquides, **caractérisé en ce qu'**une unité de commande (140) du système de mélange de liquides commande le régulateur de mélange en fonction d'une concentration d'un premier composé chimique dans le composant à mélanger mesurée par un premier capteur (121) agencé dans la seconde conduite et d'une valeur BRIX du composant à mélanger mesurée par un capteur BRIX (122) agencé dans la seconde conduite, dans lequel la valeur BRIX mesurée peut être influencée par le composé chimique aromatique et le premier composé chimique, et le premier capteur (121) mesure la présence et la quantité du premier composé chimique, qui peut influencer la valeur mesurée par le capteur BRIX, et dans lequel l'unité de commande (140) pour commander le régulateur de mélange corrige la valeur mesurée par le capteur BRIX (122) sur la base de la valeur mesurée par le premier capteur (121) et utilise la valeur corrigée du capteur BRIX en tant que valeur BRIX du composé chimique aromatique du composant à mélanger pour commander le régulateur de mélange (130).

8. Procédé de mélange selon la revendication 7, dans lequel l'unité de commande (140) commande le régulateur de mélange (130) en temps réel en fonction de la concentration mesurée du composé chimique et de la valeur BRIX mesurée.

9. Procédé de mélange selon la revendication 7 ou 8, dans lequel, pour commander le régulateur de mélange (130), une quantité du composant à mélanger correspondant à la valeur BRIX et une quantité du composant de base sont respectivement additionnées séparément par l'unité de commande (140), et dans lequel l'unité de commande commande le régulateur de mélange de telle sorte que la somme de la quantité des composants à mélanger et de la quantité du composant de base correspond à une valeur cible prévue.

10. Procédé de mélange selon la revendication 9, dans lequel après un intervalle de temps prédéterminé et après l'utilisation d'une quantité prédéterminée du composant de base et/ou du composant à mélanger, la valeur additionnée de la quantité du composant à mélanger et la valeur additionnée de la quantité du composant de base sont réduites à une valeur de base.

11. Procédé de mélange selon l'une quelconque des revendications 7 à 10, dans lequel le premier capteur (121) est ou comprend un capteur spectroscopique et mesure la quantité du composé chimique en mesurant les émissions du composant à mélanger.

12. Procédé de mélange selon la revendication 11, dans lequel le capteur spectroscopique mesure les émissions dans au moins deux plages de longueur d'onde dans la plage infrarouge.

13. Procédé de mélange selon l'une quelconque des revendications 7 à 12, dans lequel le composant de base est l'eau et le composant à mélanger est un sirop liquide.
